# EUROPEAN PATENT SPECIFICATION

(11) **EP 4 350 844 B1**
(45) Date of publication and mention of the grant of the patent: **02.12.2026**
(21) Application number: 22306489.0
(22) Date of filing: 05.10.2022
(51) Int. Cl.: H01M 10/653, H01M 10/6555, H01M 10/659

(54) **AN ASSEMBLY COMPRISING A PLURALITY OF ELECTROCHEMICAL CELLS AND AN ELECTRICAL DEVICE COMPRISING SUCH ASSEMBLY**
ANORDNUNG MIT EINER VIELZAHL VON ELEKTROCHEMISCHEN ZELLEN UND ELEKTRISCHE VORRICHTUNG MIT SOLCH EINER ANORDNUNG
ENSEMBLE COMPRENANT UNE PLURALITÉ DE CELLULES ÉLECTROCHIMIQUES ET DISPOSITIF ÉLECTRIQUE COMPRENANT UN TEL ENSEMBLE

(43) Date of publication of application: 10.04.2024
(73) Proprietor: Automotive Cells Company SE, 33520 Bruges (FR)
(72) Inventor: ALI, Sikandar, 33320 EYSINES (FR); SIBONI, Laurent, 33160 ST-MEDARD EN JALLES (FR); CHAUVEAU, Pierre, 33520 BRUGES (FR); LALLEMENT, Julien, 33290 LE PIAN-MÉDOC (FR)
(74) Representative: Lavoix

(56) References cited:
- EP-A1- 3 432 411
- EP-A1- 3 793 000
- CN-A- 112 467 285
- US-A1- 2010 136 404
- US-A1- 2011 159 340
- US-A1- 2021 257 690

## Description

The present invention relates to an assembly comprising a plurality of electrochemical cells.

The invention applies in particular to the manufacturing of a battery, especially for an electric or a hybrid vehicle. By "battery" is meant a plurality of electrochemical cells electrically connected to one another. According to a particular example of a battery, the plurality of electrochemical cells is arranged in the form of one or more module(s), each module comprising a plurality of electrochemical cells electrically connected to one another and mechanically assembled to one another by an assembly system, such as assembly plates. An electrochemical cell comprises, in particular, a group of positive electrodes connected to each other and a group of negative electrodes connected to each other, separated by a separator, the combination being known as a "stack". The positive electrodes connected to each other form a positive terminal, and the negative electrodes connected to each other form a negative terminal.

In order to prevent or delay thermal runaway between the electrochemical cells, it is well known to install insulating layers between the electrochemical cells. Such layers are for example made of a thermally insulating material.

In general, the insulating layers placed between the electrochemical cells of a battery are identical to each other.

However, in order to reach sufficient efficiency in preventing thermal propagation between the electrochemical cells at any point of the battery, expensive layers with high thermal resistance are required. This leads to an increase in the cost of the battery. While in certain worst cases, this arrangement is not sufficient in preventing thermal propagation between cells to avoid thermal runaway in neighboring battery cells at any point of the battery.

Each of the documents US 2021/257690 A1, CN 112 467 285 A, EP 3 432 411 A1, EP 3 793 000 A1, US 2010/136404 A1 and US 2011/159340 A1 describes an assembly comprising a plurality of electrochemical cells and a plurality of insulating layers.

One aim of the invention is thus to provide a solution preventing thermal runway in neighboring battery cells at any point of the battery in an efficient and economical way.

To this end, the invention proposes an assembly according to claim 1.

In other embodiments, the assembly comprises one or several features according to claims 2 to 13, taken individually or in any technically feasible combination.

The invention also relates to an electrical device according to claim 14.

The invention and its advantages will be better understood on reading the following description given solely by way of non-limiting examples and with reference to the appended drawings, in which:
- Figure 1 is a schematic perspective view of a part of an electric device comprising an assembly according to a first embodiment of the invention;
- Figure 2 is a schematic side view of the assembly depicted in Figure 1; and
- Figure 3 is a schematic side view of an assembly according to a second embodiment of the invention.

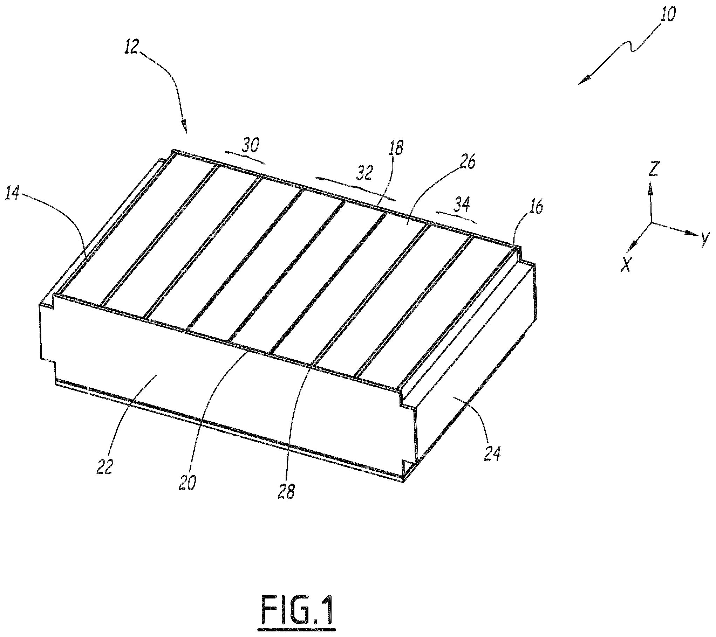

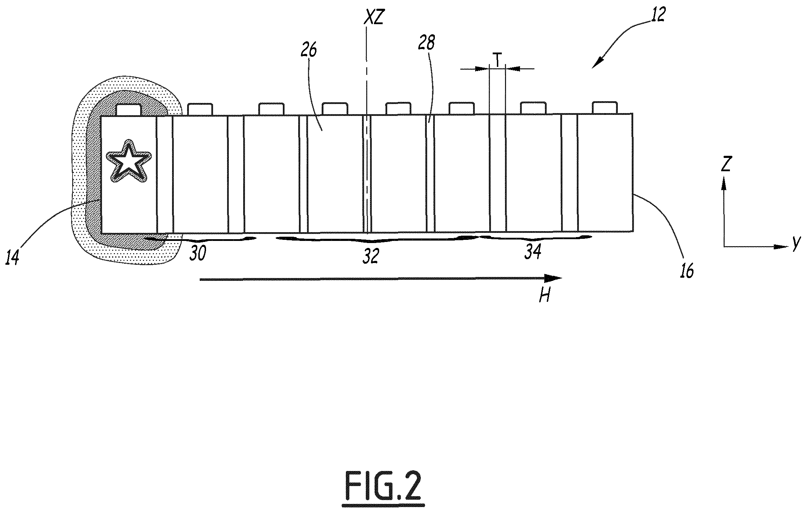

An electrical device 10 according to a first embodiment of the invention will be described with reference to Figure 1 and 2.

The electrical device 10 is only partially depicted in Figure 1 and is for example a battery, a battery pack, or a battery module intended to be assembled with other modules in order to form a battery.

The electrical device 10 is for example intended to be installed in an electric or hybrid motor vehicle (not shown).

The electrical device 10 defines a longitudinal direction X that is for example the direction of travel of the vehicle, and a transverse direction Y perpendicular to the longitudinal direction X and which is for example the transverse direction of the vehicle.

A third direction Z is further defined which is perpendicular to the longitudinal direction X and the transverse direction Y, and which is for example intended to be substantially vertical when the vehicle is on a horizontal surface (not shown).

The electrical device 10 comprises at least one assembly 12, the assembly 12 comprising a first end 14 and second end 16 opposed to each other along the transverse direction Y and further comprising a first side 18 and a second side 20 opposed to each other along the longitudinal direction X.

The electrical device 10 preferably comprises a plurality of assembly 12 electrically and mechanically connected to each other.

As shown in Figure 1, the electrical device 10 preferably comprises, for each assembly 12, two side plates 22 and two end plates 24.

In particular, each of the two side plates 22 lies against one of the first side 18 and the second side 20 of the assembly 12, and preferably covers it entirely.

Each of the two end plates 24 lies against one of a first end 14 and second end 16 of the assembly 12, and preferably covers it entirely.

The assembly 12 comprises a plurality of electrochemical cells 26 arranged along the transverse direction Y, especially between the two end plates 24.

The assembly 12 preferably comprises at least four electrochemical cells 26.

In the example shown in the figures, the assembly 12 comprises eight electrochemical cells 26.

Furthermore, the assembly 12 comprises a plurality of insulating layers 28, each of the insulating layers 28 extending perpendicularly to the transverse direction Y, i.e. along the longitudinal direction X, and being arranged along the transverse direction Y between two adjacent electrochemical cells 26.

In particular, the assembly 12 consists of a simple alternation of electrochemical cells 26 and insulating layers 28.

Preferably, the electrochemical cells 26 and the insulating layers 28 are arranged successively against each other in the transverse direction Y, so that there is no mechanical gap between these elements.

The assembly 12 preferably comprises at least three insulating layers 28.

In particular, the assembly 12 comprises a number of insulating layer 28 corresponding to the number of electrochemical cells 26 minus one.

In the example shown in the figures, the assembly 12 comprises seven insulating layers 28.

The insulating layers 28 is for example a plate, a foam or a gel of a thermal insulating material.

Preferably, the insulating layers 28 are made of a material selected from silicone, aerogel, fiberglass, Mica, and a phase-change material.

The plurality of insulating layers 28 consists of a first end group 30 of insulating layers, a central group 32 of insulating layers and a second end 34 group of insulating layers.

Each of the first end group 30, the central group 32 and the second end group 34 comprises at least one insulating layer 28.

The first end group 30, the central group 32 and the second end group 34 are successive and arranged in that particular order along the transverse direction Y.

In particular, as shown in Figures 1 and 2, the insulating layers 28 of the first end group 30 are nearest to the first end 14 of the assembly 12. The insulating layers 28 of the second end group 34 are nearest to the second end 16 of the assembly 12. The insulating layers 28 of central group 32 are located between the insulating layers 28 of the first end group 30 and the insulating layers 28 of the second end group 34 along the transverse direction Y.

Preferably, the first end group 30 and the second end group 34 have a same number of insulating layers 28.

In the example shown in Figures 1 and 2, each of the first end group 30 and the second end group 34 is composed of two insulating layers 28, and the central group 34 is composed of three insulating layers 28.

Advantageously, the first end group 30 and the second end group 34 are symmetrical to each other with respect to a median plane XZ of the assembly 12. The median plan XZ of the assembly 12 is a plane perpendicular to the transverse direction Y and is preferably at the same distance from each end 14, 16 of the assembly 12.

Each of the insulating layers 28 has a thermal resistance *rₜₕ* along the transverse direction Y. This thermal resistance *rₜₕ* quantifies the surface resistance to a heat flow along the transverse direction Y between two isotherms. For each insulating layer 28, the two isotherms are preferably two plane surfaces of the insulating layer 28 parallel to each other, each lying against one of the corresponding electrochemical cells 26.

The thermal resistance *rₜₕ* along the transverse direction Y of each of the insulating layers 28 is for example defined by the following formula: ${r}_{th} = \frac{T}{λ}$, wherein T is the thickness of the insulating layer 28 and *λ* is the thermal conductivity of the insulating layer 28.

More specifically, the thickness T of each insulating layer 28 is defined in the transverse direction Y, and corresponds to the gap along the transverse direction Y between the two nearby electrochemical cells 26 as illustrated in Figure 2.

According to the invention, the arithmetical mean of thermal resistances *rₜₕ* of the first end group 30 and the arithmetical mean of thermal resistances *rₜₕ* of the second end group 34 are higher than the arithmetical mean of thermal resistances *rₜₕ* of the central group 32.

Preferably, the lowest thermal resistance *rₜₕ* in the first end group 30 and the lowest thermal resistance *rₜₕ* in the second end group 34 are at least 10% higher, preferably at least 50% higher, than the highest thermal resistance *rₜₕ* in the central group 32.

In the first embodiment of the invention, the thermal resistances *rₜₕ* of the first end group 30 all have the same value +/- 5% and the thermal resistances *rₜₕ* of the second end group 34 all have the same value +/- 5%.

More specifically, the value of the thermal resistances *rₜₕ* of the first end group 30 is equal +/- 5% to the value of the thermal resistances *rₜₕ* of the second end group 34.

Moreover, in the first embodiment of the invention, the thermal resistances *rₜₕ* of the central group 32 all have the same value +/- 5%.

More particularly, in the first embodiment of the invention illustrated in Figures 1 and 2, the thermal conductivities *λ* of the insulating layers 28 of the assembly 12 all have the same value +/- 5% and the variation of thermal resistances *rₜₕ* is obtained by a variation of thicknesses T of the insulating layers 28.

To this end, the arithmetical mean of thicknesses T of the first end group 30 and the arithmetical mean of thicknesses T of the second end group 34 are larger than the arithmetical mean of the thicknesses T of the central group 32.

Preferably, the lowest thickness T in the first end group 30 and the lowest thickness T in the second end group 34 are at least 10% larger, preferably at least 50% larger, than the highest thickness T in the central group 32.

More specifically, as shown in Figure 2, the thicknesses T of the first end group 30 all have the same value +/- 5% and the thicknesses T of the second end group 34 all have the same value +/- 5%.

Preferably, the value of the thicknesses T of the first end group 30 is equal to the value of the thicknesses T of the second end group 34.

For example, the thicknesses T of the first end group 30 and the thicknesses T of the second end group 34 are comprised between 2 mm and 6 mm, preferably between 2.5 mm and 4.5 mm.

Moreover, as shown in Figure 2, the thicknesses T of the central group 32 all have the same value +/- 5%.

For example, the thicknesses T of the insulating layers 28 of the central group 32 are comprised between 0.1 mm and 4 mm, preferably between 0.5 mm and 3 mm.

The behavior of such assembly 12 in case of heating in one of the electrochemical cells 26 will now be described with reference to Figure 2.

As shown in Figure 2, when heat is generated at an electrochemical cell 26 near the first end 14 of the assembly 12, the heat H propagates to the neighboring electrochemical cells 26 along the transverse direction Y towards the second end 16.

The same applies when heat is generated at an electrochemical cell 26 near the second end 16 of the assembly 12.

On the contrary, when heat is generated at an electrochemical cell 26 near the median plan XZ of the assembly 12, i.e. in the middle of the assembly 12, the heat propagates to the neighboring electrochemical cells 26 along the transverse direction Y in both ways, i.e. towards the first end 14 and towards the second end 16.

As the heat is propagated in both ways, the thermal resistance required in the middle of the assembly 12 is actually smaller as the thermal resistance required near the ends 14, 16 of the assembly.

Thus, the smaller thermal resistances *rₜₕ* of the central group 32 are sufficient to prevent, or at least delay, the thermal runaway propagating in both ways in the middle of the assembly 12.

Furthermore, the higher thermal resistances *rₜₕ* of the first end group 30 and of the second end group 34 allow efficiently preventing, or at least delaying, the thermal runaway propagating in only one way.

The assembly 12 according to the invention therefore allows preventing thermal runway in the electrical device 10 in an efficient way at any point of the battery.

Indeed, such variation of the thermal resistance *rₜₕ* along the transverse direction Y, and in particular of the thickness T, of the insulating layers 28 allows optimizing the thermal insulation by adapting the thermal resistance *rₜₕ* according to the position along the transverse direction Y, and thus according to the required thermal insulation.

This allows reducing the cost of the insulating layers 28, and thus of the electrical device 10.

Furthermore, this allows reducing the total length of the assembly 12 along the transverse direction Y by avoiding the use of too thick insulating layers 28.

This advantage makes it possible to increase the energy density of the electrical device 10.

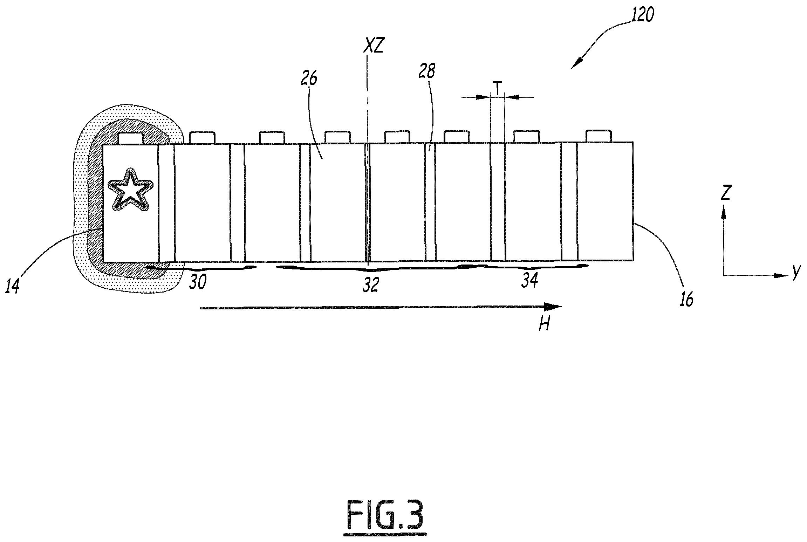

With reference to Figure 3, an assembly 120 according to a second embodiment of the invention is described. The assembly 120 is analogous to the assembly 12 shown in Figures 1 and 2. Similar elements have the same numerical references and will not be described again. Only the differences will be described in detail below.

Unlike the first embodiment, the thermal resistances *rₜₕ* of the first end group 30 do not all have the same value and the thermal resistances *rₜₕ* of the second end group 34 do not all have the same value.

More particularly, in this second embodiment, the thermal resistance *rₜₕ* of each of the insulating layers 28 of the first end group 30 and the thermal resistance *rₜₕ* of each of the insulating layers 28 of the second end group 34 increases as a function of the distance of said insulating layer 28 from the median plan XZ of the assembly 12.

In other words, the further away an insulating layer 28 of the first end group 30 is from the median plan XZ of the assembly 12, the higher is the thermal resistance *rₜₕ* of said insulating layer 28. The same applies for the insulating layers 28 of the second end group 34.

In particular, as shown in Figure 3, the thickness T of each of the insulating layers 28 of the first end group 30 and the thickness T of each of the insulating layers 28 of the second end group 34 increases as a function of the distance of the insulating layer 28 from the median plan XZ of the assembly 12.

In the example showed in Figure 3, the thicknesses T of the first end group 30 and the thicknesses T of the second end group 34 increase with a constant step, for example equal to 0.5 mm.

Furthermore, unlike the first embodiment, the thermal resistances *rₜₕ* of the central group 32 do not all have the same value.

More particularly, in this second embodiment, the thermal resistance *rₜₕ* of each of the insulating layers 28 of the central group 32 increases as a function of the distance of said insulating layer 28 from the median plan XZ of the assembly 12.

In other words, the further away an insulating layer 28 of the central group 32 is from the median plan XZ of the assembly 12, the higher is the thermal resistance *rₜₕ* of said insulating layer 28.

In particular, as shown in Figure 3, the thickness T of each of the insulating layers 28 of the central group 32 increases as a function of the distance of said insulating layer 28 from the median plan XZ.

In the example showed in Figure 3, the thicknesses T of the insulating layers 28 of the central group 32 increase with a constant step, for example equal to 0.5 mm.

The invention is not limited to the previously described embodiments illustrated in the drawings.

In particular, a combination of the first embodiment and the second embodiment is possible.

More specifically, as a variant, the thermal resistances *rₜₕ* of the first end group 30 all have the same value +/- 5% and the thermal resistances *rₜₕ* of the second end group 34 all have the same value +/- 5%. However, the thermal resistance *rₜₕ* of each of the insulating layers 28 of the central group 32 increases as a function of the distance of said insulating layer 28 from the median plan XZ of the assembly 12.

In another variant, the thermal resistance *rₜₕ* of each of the insulating layers 28 of the first end group 30 and the thermal resistance *rₜₕ* of each of the insulating layers 28 of the second end group 34 increases as a function of the distance of said insulating layer 28 from the median plan XZ of the assembly 12. However, the thicknesses T of the central group 32 all have the same value +/- 5%.

In another particular embodiment of the invention (not shown), the thicknesses T of the insulating layers 28 of the assembly 12 all have the same value +/- 5% and the variation of thermal resistances *rₜₕ* is obtained by a variation of thermal conductivities *λ* of the insulating layers 28.

Particularly, the arithmetical mean of the thermal conductivities *λ* of the insulating layers 28 of the first end group 30 and the arithmetical mean of the thermal conductivities *λ* of the second end group 34 are lower than the arithmetical mean of the thermal conductivities *λ* of the insulating layers 28 of the central group 32.

All the embodiments and variants described above for the variation of thicknesses T also apply to the variation of thermal conductivities *λ* of the insulating layers 28.

The variation of thermal conductivities *λ* of the insulating layers 28 is for example obtained by selecting different insulating materials according to the desired thermal conductivity *λ*.

For example, the insulating layers 28 of the first end group 30 and the insulating layers 28 of the second end group 34 are made of a first material and the insulating layers 28 of the central group 32 are made of a second material, the second material being different from the first material.

Preferably, the first material has a lower thermal conductivities *λ* than the second material.

The first material and the second material are preferably selected from silicone, aerogel, fiberglass, Mica, and a phase-change material.

In another particular embodiment of the invention not shown, the variation of thermal resistances *rₜₕ* is obtained by variation at the same time of thicknesses T and of the thermal conductivities *λ* of the insulating layers 28, according to the one of the embodiments and variants described above.

## Claims

1. An assembly (12) comprising:
- a plurality of electrochemical cells (26) arranged along a transverse direction (Y), and
- a plurality of insulating layers (28), each of the insulating layers (28) extending perpendicularly to the transverse direction (Y) and being arranged along the transverse direction (Y) between two adjacent electrochemical cells (26), each of the insulating layers (28) having a thermal resistance (*rₜₕ*) along the transverse direction (Y),
the plurality of insulating layers (28) consisting of a first end group (30) of insulating layers, a central group (32) of insulating layers and a second end group (34) of insulating layers, the first end group (30), the central group (32) and the second end group (34) being successive and arranged in that particular order along the transverse direction (Y),
**characterized in that** the arithmetical mean of thermal resistances (*rₜₕ*) of the first end group (30) and the arithmetical mean of thermal resistances (*rₜₕ*) of the second end group (34) are higher than the arithmetical mean of thermal resistances (*rₜₕ*) of the central group (32), the lowest thermal resistance (*rₜₕ*) in the first end group (30) and the lowest thermal resistance (*rₜₕ*) in the second end group (34) being at least 10% higher, preferably at least 50% higher, than the highest thermal resistance (*rₜₕ*) in the central group (32).

2. The assembly according to claim 1, wherein the first end group (30) and the second end group (34) have a same number of insulating layers (28).

3. The assembly according to claim 1 or 2, wherein the thermal resistances (*rₜₕ*) of the first end group (30) all have the same value +/- 5% and the thermal resistances (*rₜₕ*) of the second end group (34) all have the same value +/- 5%.

4. The assembly according to claim 3, wherein the value of the thermal resistances (*rₜₕ*) of the first end group (30) is equal +/- 5% to the value of the thermal resistances (*rₜₕ*) of the second end group (34).

5. The assembly according to claim 1 or 2, wherein the thermal resistance (*rₜₕ*) of each of the insulating layers (28) of the first end group (30) and the thermal resistance (*rₜₕ*) of each of the insulating layers (28) of the second end group (34) increases as a function of the distance of said insulating layer (28) from a median plan (XZ) of the assembly (12), the median plan (XZ) being perpendicular to the transverse direction (Y).

6. The assembly according to any one of the preceding claims, wherein the thermal resistances (*rₜₕ*) of the central group (32) all have the same value +/- 5%.

7. The assembly according to any one of the claims 1 to 5, wherein the thermal resistance (*rₜₕ*) of each of the insulating layers (28) of the central group (32) increases as a function of the distance of said insulating layer (28) from a median plan (XZ) of the assembly (12), the median plan (XZ) being perpendicular to the transverse direction (Y).

8. The assembly according to any one of the preceding claims, wherein each of the insulating layers (28) defines a thickness (T) in the transverse direction (Y), the arithmetical mean of thicknesses (T) of the first end group (30) and the arithmetical mean of thicknesses (T) of the second end group (34) being larger than the arithmetical mean of thicknesses (T) of the central group (32).

9. The assembly according to claim 8, wherein the lowest thickness (T) in the first end group (30) and the lowest thickness (T) in the second end group (34) are at least 10% larger, preferably at least 50% larger, than the highest thickness (T) in the central group (32).

10. The assembly according to any one of the preceding claims, wherein the thicknesses (T) of the first end group (30) and the thicknesses (T) of the second end group (34) are comprised between 2 mm and 6 mm, preferably between 3 mm and 4.5 mm and/or the thicknesses (T) of the central group (32) are comprised between 0.1 mm and 4 mm, preferably between 0.5 mm and 3 mm.

11. The assembly according to any one of the preceding claims, wherein each of the insulating layers (28) has a thermal conductivity (*λ*), the arithmetical mean of the thermal conductivities (*λ*) of the first end group (30) and the arithmetical mean of the thermal conductivities (*λ*) of the second end group (34) being lower than the arithmetical mean of the central group (32).

12. The assembly according to any one of the preceding claims, wherein the insulating layers (28) are made of a material selected from silicone, aerogel, fiberglass, Mica, and a phase-change material.

13. The assembly according to any one of the preceding claims, wherein the insulating layers (28) of the first end group (30) and the insulating layers (28) of the second end group (34) are made of a first material and the insulating layers (28) of the central group (32) are made of a second material, the second material being different from the first material.

14. An electrical device (10), such as a battery module or a battery, comprising at least one assembly (12) according to any one of the preceding claims.

## Patentansprüche

1. Eine Anordnung (12), umfassend:
- eine Vielzahl von elektrochemischen Zellen (26), die entlang einer Querrichtung (Y) angeordnet sind, und
- eine Vielzahl von Isolierschichten (28), wobei sich jede der Isolierschichten (28) senkrecht zur Querrichtung (Y) erstreckt und entlang der Querrichtung (Y) zwischen zwei benachbarten elektrochemischen Zellen (26) angeordnet ist, wobei jede der Isolierschichten (28) einen Wärmewiderstand (*rₜₕ*) entlang der Querrichtung (Y) aufweist,
wobei die Vielzahl von Isolierschichten (28) aus einer ersten Endgruppe (30) von Isolierschichten, einer mittleren Gruppe (32) von Isolierschichten und einer zweiten Endgruppe (34) von Isolierschichten besteht, wobei die erste Endgruppe (30), die mittlere Gruppe (32) und die zweite Endgruppe (34) aufeinanderfolgend und in genau dieser Reihenfolge entlang der Querrichtung (Y) angeordnet sind,
**dadurch gekennzeichnet, dass** der arithmetische Mittelwert der Wärmewiderstände (*rₜₕ*) der ersten Endgruppe (30) und der arithmetische Mittelwert der Wärmewiderstände ( *rₜₕ* ) der zweiten Endgruppe (34) höher sind als der arithmetische Mittelwert der Wärmewiderstände (*rₜₕ*) der mittleren Gruppe (32), wobei der niedrigste Wärmewiderstand (*rₜₕ*) in der ersten Endgruppe (30) und der niedrigste Wärmewiderstand (*rₜₕ*) in der zweiten Endgruppe (34) mindestens 10% höher, vorzugsweise mindestens 50% höher, als der höchste Wärmewiderstand (*rₜₕ*) in der mittleren Gruppe (32) sind.

2. Die Anordnung nach Anspruch 1, wobei die erste Endgruppe (30) und die zweite Endgruppe (34) eine gleiche Anzahl von Isolierschichten (28) aufweisen.

3. Die Anordnung nach Anspruch 1 oder 2, wobei die Wärmewiderstände (*rₜₕ*) der ersten Endgruppe (30) alle denselben Wert +/- 5% aufweisen und die Wärmewiderstände (*rₜₕ*) der zweiten Endgruppe (34) alle denselben Wert +/- 5% aufweisen.

4. Die Anordnung nach Anspruch 3, wobei der Wert der Wärmewiderstände (*rₜₕ*) der ersten Endgruppe (30) gleich +/- 5% dem Wert der Wärmewiderstände (*rₜₕ*) der zweiten Endgruppe (34) ist.

5. Die Anordnung nach Anspruch 1 oder 2, wobei der Wärmewiderstand (*rₜₕ*) jeder der Isolierschichten (28) der ersten Endgruppe (30) und der Wärmewiderstand (*rₜₕ*) jeder der Isolierschichten (28) der zweiten Endgruppe (34) in Abhängigkeit vom Abstand der jeweiligen Isolierschicht (28) von einer Mittelebene (XZ) der Anordnung (12) zunehmen, wobei die Mittelebene (XZ) senkrecht zur Querrichtung (Y) steht.

6. Die Anordnung gemäß einem der vorhergehenden Ansprüche, wobei die Wärmewiderstände (*rₜₕ*) der mittleren Gruppe (32) alle denselben Wert +/- 5% aufweisen.

7. Die Anordnung nach einem der Ansprüche 1 bis 5, wobei der Wärmewiderstand (*rₜₕ*) jeder der Isolierschichten (28) der mittleren Gruppe (32) in Abhängigkeit vom Abstand der jeweiligen Isolierschicht (28) von einer Mittelebene (XZ) der Anordnung (12) zunimmt, wobei die Mittelebene (XZ) senkrecht zur Querrichtung (Y) steht.

8. Die Anordnung gemäß einem der vorhergehenden Ansprüche, wobei jede der Isolierschichten (28) eine Dicke (T) in der Querrichtung (Y) definiert, wobei der arithmetische Mittelwert der Dicken (T) der ersten Endgruppe (30) und der arithmetische Mittelwert der Dicken (T) der zweiten Endgruppe (34) größer sind als der arithmetische Mittelwert der Dicken (T) der mittleren Gruppe (32).

9. Die Anordnung nach Anspruch 8, wobei die geringste Dicke (T) in der ersten Endgruppe (30) und die geringste Dicke (T) in der zweiten Endgruppe (34) mindestens 10% größer, vorzugsweise mindestens 50% größer, als die größte Dicke (T) in der mittleren Gruppe (32) sind.

10. Die Anordnung gemäß einem der vorhergehenden Ansprüche, wobei die Dicken (T) der ersten Endgruppe (30) und die Dicken (T) der zweiten Endgruppe (34) zwischen 2 mm und 6 mm, vorzugsweise zwischen 3 mm und 4,5 mm liegen und/oder die Dicken (T) der mittleren Gruppe (32) zwischen 0,1 mm und 4 mm, vorzugsweise zwischen 0,5 mm und 3 mm liegen.

11. Die Anordnung gemäß einem der vorhergehenden Ansprüche, wobei jede der Isolierschichten (28) eine Wärmeleitfähigkeit (*λ*) aufweist, wobei der arithmetische Mittelwert der Wärmeleitfähigkeiten (*λ*) der ersten Endgruppe (30) und der arithmetische Mittelwert der Wärmeleitfähigkeiten (*λ*) der zweiten Endgruppe (34) niedriger sind als der arithmetische Mittelwert der mittleren Gruppe (32).

12. Die Anordnung gemäß einem der vorhergehenden Ansprüche, wobei die Isolierschichten (28) aus einem Material hergestellt sind, das aus Silikon, Aerogel, Glasfaser, Glimmer und einem Phasenwechselmaterial ausgewählt ist.

13. Die Anordnung gemäß einem der vorhergehenden Ansprüche, wobei die Isolierschichten (28) der ersten Endgruppe (30) und die Isolierschichten (28) der zweiten Endgruppe (34) aus einem ersten Material hergestellt sind und die Isolierschichten (28) der mittleren Gruppe (32) aus einem zweiten Material hergestellt sind, wobei das zweite Material von dem ersten Material verschieden ist.

14. Eine elektrische Vorrichtung (10), wie etwa ein Batteriemodul oder eine Batterie, umfassend mindestens eine Anordnung (12) gemäß einem der vorhergehenden Ansprüche.

## Revendications

1. Un ensemble (12) comprenant :
- une pluralité de cellules électrochimiques (26) agencées selon une direction transversale (Y), et
- une pluralité de couches isolantes (28), chacune des couches isolantes (28) s'étendant perpendiculairement à la direction transversale (Y) et étant agencée selon la direction transversale (Y) entre deux cellules électrochimiques adjacentes (26), chacune des couches isolantes (28) ayant une résistance thermique (*rₜₕ*) selon la direction transversale (Y),
la pluralité de couches isolantes (28) consistant en un premier groupe d'extrémité (30) de couches isolantes, un groupe central (32) de couches isolantes et un second groupe d'extrémité (34) de couches isolantes, le premier groupe d'extrémité (30), le groupe central (32) et le second groupe d'extrémité (34) étant successifs et agencés dans cet ordre particulier selon la direction transversale (Y),
**caractérisé en ce que** la moyenne arithmétique des résistances thermiques (*rₜₕ*) du premier groupe d'extrémité (30) et la moyenne arithmétique des résistances thermiques (*rₜₕ*) du second groupe d'extrémité (34) sont supérieures à la moyenne arithmétique des résistances thermiques (*rₜₕ*) du groupe central (32), la résistance thermique la plus faible (*rₜₕ*) dans le premier groupe d'extrémité (30) et la résistance thermique la plus faible (*rₜₕ*) dans le second groupe d'extrémité (34) étant au moins 10 % plus élevées, de préférence d'au moins 50 % plus élevées, que la résistance thermique la plus élevée (*rₜₕ*) dans le groupe central (32).

2. L'ensemble selon la revendication 1, dans lequel le premier groupe d'extrémité (30) et le second groupe d'extrémité (34) ont un même nombre de couches isolantes (28).

3. L'ensemble selon la revendication 1 ou 2, dans lequel les résistances thermiques (*rₜₕ*) du premier groupe d'extrémité (30) ont toutes la même valeur +/- 5% et les résistances thermiques (*rₜₕ*) du second groupe d'extrémité (34) ont toutes la même valeur +/- 5%.

4. L'ensemble selon la revendication 3, dans lequel la valeur des résistances thermiques (*rₜₕ*) du premier groupe d'extrémité (30) est égale +/- 5% à la valeur des résistances thermiques (*rₜₕ*) du second groupe d'extrémité (34).

5. L'ensemble selon la revendication 1 ou 2, dans lequel la résistance thermique (*rₜₕ*) de chacune des couches isolantes (28) du premier groupe d'extrémité (30) et la résistance thermique (*rₜₕ*) de chacune des couches isolantes (28) du second groupe d'extrémité (34) augmentent en fonction de la distance de ladite couche isolante (28) par rapport à un plan médian (XZ) de l'ensemble (12), le plan médian (XZ) étant perpendiculaire à la direction transversale (Y).

6. L'ensemble selon l'une quelconque des revendications précédentes, dans lequel les résistances thermiques (*rₜₕ*) du groupe central (32) ont toutes la même valeur +/- 5%.

7. L'ensemble selon l'une quelconque des revendications 1 à 5, dans lequel la résistance thermique (*rₜₕ*) de chacune des couches isolantes (28) du groupe central (32) augmente en fonction de la distance de ladite couche isolante (28) par rapport à un plan médian (XZ) de l'ensemble (12), le plan médian (XZ) étant perpendiculaire à la direction transversale (Y).

8. L'ensemble selon l'une quelconque des revendications précédentes, dans lequel chacune des couches isolantes (28) définit une épaisseur (T) dans la direction transversale (Y), la moyenne arithmétique des épaisseurs (T) du premier groupe d'extrémité (30) et la moyenne arithmétique des épaisseurs (T) du second groupe d'extrémité (34) étant supérieures à la moyenne arithmétique des épaisseurs (T) du groupe central (32).

9. L'ensemble selon la revendication 8, dans lequel l'épaisseur (T) la plus faible dans le premier groupe d'extrémité (30) et l'épaisseur (T) la plus faible dans le second groupe d'extrémité (34) sont au moins 10 % plus grandes, de préférence au moins 50 % plus grandes, que l'épaisseur (T) la plus grande dans le groupe central (32).

10. L'ensemble selon l'une quelconque des revendications précédentes, dans lequel les épaisseurs (T) du premier groupe d'extrémité (30) et les épaisseurs (T) du second groupe d'extrémité (34) sont comprises entre 2 mm et 6 mm, de préférence entre 3 mm et 4,5 mm et/ou les épaisseurs (T) du groupe central (32) sont comprises entre 0,1 mm et 4 mm, de préférence entre 0,5 mm et 3 mm.

11. L'ensemble selon l'une quelconque des revendications précédentes, dans lequel chacune des couches isolantes (28) a une conductivité thermique (*λ*), la moyenne arithmétique des conductivités thermiques (*λ*) du premier groupe d'extrémité (30) et la moyenne arithmétique des conductivités thermiques (*λ*) du second groupe d'extrémité (34) étant inférieures à la moyenne arithmétique du groupe central (32).

12. L'ensemble selon l'une quelconque des revendications précédentes, dans lequel les couches isolantes (28) sont constituées d'un matériau sélectionné parmi le silicone, l'aérogel, la fibre de verre, le mica et un matériau à changement de phase.

13. L'ensemble selon l'une quelconque des revendications précédentes, dans lequel les couches isolantes (28) du premier groupe d'extrémité (30) et les couches isolantes (28) du second groupe d'extrémité (34) sont constituées d'un premier matériau et les couches isolantes (28) du groupe central (32) sont constituées d'un second matériau, le second matériau étant différent du premier matériau.

14. Un dispositif électrique (10), tel qu'un module de batterie ou une batterie, comprenant au moins un ensemble (12) selon l'une quelconque des revendications précédentes.
